# EUROPEAN PATENT APPLICATION

(11) **EP 4 258 157 A1**
(43) Date of publication of application: **11.10.2023**
(21) Application number: 23166870.8
(22) Date of filing: 05.04.2023
(51) Int. Cl.: G06F 30/20, G06F 111/08, G06F 119/02

(54) **PROBABILISTIC MODEL, SYSTEM AND APPLICATION FOR COMPONENT DESIGN OPTIMIZATION**

(30) Priority: 05.04.2022 US 202263327620 P; 20.10.2022 US 202263417906 P
(71) Applicant: Raytheon Technologies Corporation, Farmington, CT 06032 (US)
(72) Inventor: BURLATSKY, Sergei F., Farmington, 06032 (US); FURRER, David U., Farmington, 06032 (US); VENKATESH, Vasisht, Farmington, 06032 (US); NORAAS, Ryan B., Farmington, 06032 (US); BARKER, Stephen J., Farmington, 06032 (US)
(74) Representative: Dehns

(57) **Abstract**

The present disclosure provides advantageous probabilistic models and applications for component (e.g., titanium component) design optimization, and related methods of use. More particularly, the present disclosure provides advantageous probabilistic models, systems and applications for component design optimization and related methods of use, and where the probabilistic models, systems and applications can accurately predict the life/failure of components (e.g., titanium components) based on material microstructure statistics and/or product mission specifics and/or variations. Disclosed are probabilistic systems and methods for predicting dwell fatigue behavior of a component (e.g., titanium component). The present disclosure advantageously provides an analytical modeling framework that captures the various physics-based mechanisms for dwell fatigue damage accumulation, crack nucleation, crack propagation and fracture in components or materials (e.g., anisotropic components/materials). The probabilistic modeling framework thereby enables the prediction of dwell fatigue behavior as a function of microstructure (e.g., material microstructure statistics) and/or loading conditions (e.g., product mission specifics).

## Description

### FIELD OF THE DISCLOSURE

The present disclosure relates to probabilistic models, systems and applications for component (e.g., titanium component) design optimization, and related methods of use.

### BACKGROUND OF THE DISCLOSURE

In general, anisotropic materials (e.g., certain titanium materials, certain zirconium materials, etc.) can be susceptible to micro-texture-based dwell fatigue debits. It is noted that this can occur at low temperatures and as such is sometimes called cold dwell fatigue, or cold-dwell low-cycle fatigue (LCF). There is generally no known approach to predict this behavior for production component design analysis and optimization and has forced the industry to either eliminate micro-texture in certain materials (e.g., titanium materials), reduce stress levels below where the mechanism occurs, or live with product risk (which is typically not acceptable).

For example, titanium dwell fatigue debits are caused by heterogeneous assemblages of microstructure and from the fact that the dominant phase in many titanium alloys is the hexagonally closed packed crystal structure phase, called alpha phase, and is anisotropic relative to orientation-specific properties, such as modulus, strength and creep. This anisotropy of properties can give rise to variations in local material or component properties if the polycrystalline assemblage of grains and phases exhibit texture (e.g., non-random distribution of crystal orientations). A region of alpha grains with a common or near-common crystallographic orientation is called a microtexture region or MTR. The presence of these MTRs and their characteristics, such as size, quantity, spacing, density, intensity, etc., can provide for the potential of dwell fatigue cracking and associated fatigue life debits.

There have been a number of researchers that have studied this mechanism in an attempt to develop both a fundamental understanding of the mechanics and mechanisms of the damage generation and accumulation process, as well as to develop a method to predict this behavior. These fundamental research efforts provide some level of guidance relative to how the dwell fatigue mechanism works, but do not provide for a holistic framework (e.g., for certain required mechanisms sub-mechanisms to be described and linked across length scales from sub-micron crystallographic slip to macroscopic creep and damage accumulation within components ranging in a variety of sizes - for example, ranging from 100s of mm to larger than a meter).

An interest exists for advantageous probabilistic models, systems and applications for component (e.g., titanium component) design optimization, and related methods of use.

These and other inefficiencies and opportunities for improvement are addressed and/or overcome by the systems and methods of the present disclosure.

### BRIEF SUMMARY OF THE DISCLOSURE

The present disclosure provides advantageous probabilistic models, systems and applications for component (e.g., titanium component) design optimization, and related methods of use.

More specifically, the present disclosure provides advantageous probabilistic models, systems and applications for component design optimization and related methods of use, and where the probabilistic models, systems and applications can predict the life/failure of components (e.g., titanium components) based on material microstructure statistics and/or product mission specifics and/or variations. Disclosed are probabilistic systems and methods for predicting dwell fatigue behavior of a component (e.g., titanium component).

The present disclosure advantageously provides an analytical modeling framework that captures the various physics-based mechanisms for dwell fatigue damage accumulation, crack nucleation, crack propagation and fracture in components or materials (e.g., anisotropic components/materials). The probabilistic modeling framework thereby enables the prediction of dwell fatigue behavior as a function of microstructure (e.g., material microstructure statistics) and/or loading conditions (e.g., product mission specifics).

As noted, previous research efforts provide some level of guidance relative to how the dwell fatigue mechanism works, but do not provide for a holistic framework (e.g., for certain required sub-mechanisms to be described and linked across length scales from sub-micron crystallographic slip to macroscopic creep and damage accumulation within components ranging in a variety of sizes - for example, ranging from 100s of mm to larger than a meter). The present disclosure provides an approach to define each of the critical sub-mechanisms in efficient analytical model formats, combine them into a linked computational workflow that can bridge the length-scales of this challenge. The construct of the models and workflow enable rapid computational analysis at industrially relevant rates and commonly used industrial computing systems.

In addition to developing accurate sub-models and a framework for holistic computational workflow, another important element that has not been previously overcome is the application of this computational modeling approach beyond simple deterministic calculations and to establish a fully probabilistic modeling system. Previous efforts to predict dwell fatigue have relied on prediction of a single instance of an assemblage of structures. In the framework provided by the present disclosure, microstructure and other critical input parameters are treated as probabilistic distributions and are used to calculate and predict dwell fatigue behavior over arbitrary geometries and stress states and paths for components.

The present disclosure provides for a probabilistic method for predicting dwell fatigue behavior including providing a probabilistic modeling framework that captures physics-based mechanisms for dwell fatigue damage accumulation, crack nucleation, crack propagation and fracture in a component; and utilizing the probabilistic modeling framework to predict dwell fatigue behavior of the component as a function of microstructure and loading conditions of the component; wherein the component comprises an anisotropic material.

In addition to one or more of the features described, or as an alternative to any of the foregoing embodiments, the anisotropic material comprises at least one of titanium, zirconium, magnesium or other hexagonal close-packed (HCP) metals or alloys.

In addition to one or more of the features described, or as an alternative to any of the foregoing embodiments, the component is a turbine engine rotor component.

In addition to one or more of the features described, or as an alternative to any of the foregoing embodiments, the component is an arbitrary material sample, a test specimen or a full-scale component.

In addition to one or more of the features described, or as an alternative to any of the foregoing embodiments, the probabilistic modeling framework comprises sub-models, the sub-models describing critical sub-mechanisms that lead to dwell fatigue debits of the component.

In addition to one or more of the features described, or as an alternative to any of the foregoing embodiments, wherein material parameter inputs to the sub-models include fracture toughness of hard oriented grains, parameters of microscopic crack growth, activation volume for dislocation slip, hardening modulus, elastic modulus, yield strength, activation energy for dislocation slip, time scale parameters, average distance between slip bands, minimum stress for creep and a strength factor for a soft grain or a soft bi-crystal grain with a basal twist boundary.

In addition to one or more of the features described, or as an alternative to any of the foregoing embodiments, the sub-models include a macroscopic creep model; a microscopic creep model; a microscopic dwell-dependent cyclic crack growth model, a microscopic dwell-independent cyclic crack growth model, and a macroscopic dwell-independent cyclic crack growth model; and wherein the sub-models include a nucleation criterion and a fracture criterion.

In addition to one or more of the features described, or as an alternative to any of the foregoing embodiments, the material parameter inputs are established by separate material characterization or by test specimen and component calibration.

In addition to one or more of the features described, or as an alternative to any of the foregoing embodiments, wherein small volume, uniquely stressed test specimen data is applied to the calibration of the sub-models, which is then applied to larger volume, arbitrarily stressed components.

In addition to one or more of the features described, or as an alternative to any of the foregoing embodiments, the probabilistic modeling framework is constructed in a probabilistic format through the use of Monte Carlo or closed-form methods.

In addition to one or more of the features described, or as an alternative to any of the foregoing embodiments, wherein inputs to the probabilistic modeling framework are provided in a statistically-based manner.

In addition to one or more of the features described, or as an alternative to any of the foregoing embodiments, the probabilistic modeling framework defines microstructure features in the component.

In addition to one or more of the features described, or as an alternative to any of the foregoing embodiments, the probabilistic modeling framework utilizes microtexture region (MTR) characterization and statistical quantification to predict dwell fatigue behavior of the component.

In addition to one or more of the features described, or as an alternative to any of the foregoing embodiments, wherein inputs to the probabilistic modeling framework include various orientation-based micro-texture region (MTR) metrics including size, quantity, density and spacing; size-dependent soft grain neighbor frequency; and MTR clustering metrics, including information for discrete MTR misorientation categories; and wherein the inputs for the MTR metrics include determining the area fraction, number density (count / unit area) and size distribution of the MTRs.

In addition to one or more of the features described, or as an alternative to any of the foregoing embodiments, wherein utilizing the probabilistic modeling framework to predict dwell fatigue behavior of the component comprises modeling macroscopic stresses and macroscopic creep to analyze macroscopic creep and redistribution of stresses (e.g., to analyze relaxation and stress redistribution) throughout the volume of the component during the initial stages of cyclic loading until the stress in all regions are determined to be effectively constant upon further cyclic loading; and utilizing the stresses in each volume of the component to predict the localized strain and damage from cycle-1 to cycle-N, where cycle-N is an arbitrary number of loading cycles.

In addition to one or more of the features described, or as an alternative to any of the foregoing embodiments, wherein utilizing the probabilistic modeling framework to predict dwell fatigue behavior of the component includes incorporating MTR size and frequency information into the modeling framework, along with a parameter on statistics of MTR clustering of hard oriented regions of varying distribution of crystallographic misorientations.

In addition to one or more of the features described, or as an alternative to any of the foregoing embodiments, wherein mechanisms included in the modeling framework comprise of criteria for initial crack nucleation, and crack growth within an MTR, and external to the MTR.

In addition to one or more of the features described, or as an alternative to any of the foregoing embodiments, the probabilistic modeling framework includes a crack nucleation model and a crack propagation model to describe both stages of material fatigue failure.

In addition to one or more of the features described, or as an alternative to any of the foregoing embodiments, wherein nucleation and propagation of a fatigue crack is calculated separately.

In addition to one or more of the features described, or as an alternative to any of the foregoing embodiments, wherein statistics of a given material pedigree is used to predict crack growth rate within and outside of an original micro-texture region (MTR) feature.

In addition to one or more of the features described, or as an alternative to any of the foregoing embodiments, the model takes into account location specific variations of material mechanical properties such as elasticity modulus and yield stress, and of microstructure parameters such as MTR size, hard to soft grains ratio, frequency and density distributions.

In addition to one or more of the features described, or as an alternative to any of the foregoing embodiments, the model calculates the crack propagation in the average textured material as a function of average microstructure parameters and also crack propagation acceleration factors in clustered MTRs as a function of MTR parameters.

In addition to one or more of the features described, or as an alternative to any of the foregoing embodiments, it is noted that a typical challenge for part life prediction is associated with high cost of full part life material testing and the difference between the behavior of small test specimens that are typically much smaller than the part and are tested at different conditions. The model provides the means of using the specimen data to predict the full part behavior.

The above described and other features are exemplified by the following figures and detailed description.

Any combination or permutation of embodiments is envisioned. Additional advantageous features, functions and applications of the disclosed systems and methods of the present disclosure will be apparent from the description which follows, particularly when read in conjunction with the appended figures. All references listed in this disclosure are hereby incorporated by reference in their entireties.

### BRIEF DESCRIPTION OF THE DRAWINGS

The following figures are exemplary embodiments wherein the like elements are numbered alike.

Features and aspects of embodiments are described below with reference to the accompanying drawings, in which elements are not necessarily depicted to scale.

Exemplary embodiments of the present disclosure are further described with reference to the appended figures. It is to be noted that the various steps, features and combinations of steps/features described below and illustrated in the figures can be arranged and organized differently to result in embodiments which are still within the scope of the present disclosure. To assist those of ordinary skill in the art in making and using the disclosed systems and methods, reference is made to the appended figures, wherein:

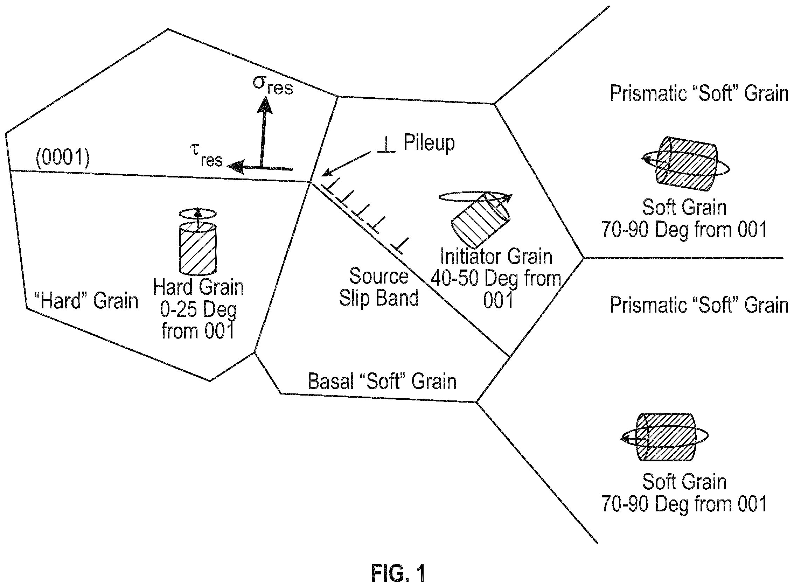

Figure 1 is a schematic of the incremental, cyclic damage mechanism that results in slip in a soft grain (region); continued accumulation of slip damage from cyclic creep in the soft grain (region) results in intrusions into and high stresses at the intersection of the hard grain. It should be noted that grains are typically on the 5 to 35 microns, but typically 10 to 25 microns. The soft grains ("basal" soft and/or "prismatic" soft) are part of features called initiator grains. The soft grains can be of a completely single HCP orientation or a bi-crystal with two HCP grains with a common C-axis, but with a rotation around the C-axis, which forms a basal twist boundary.

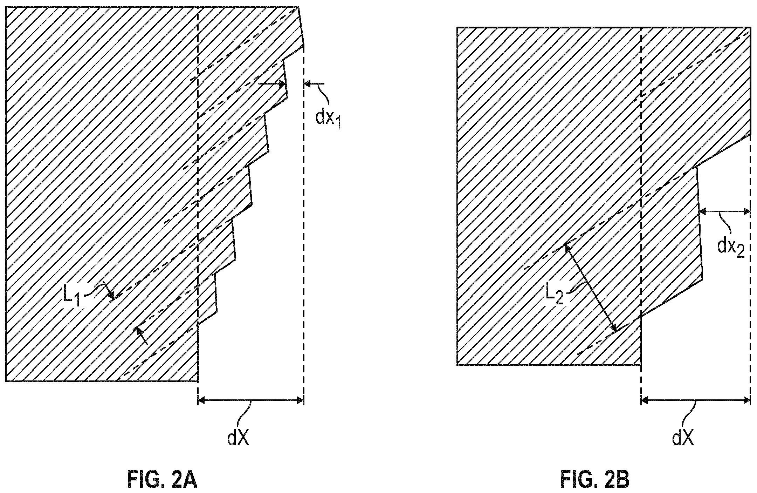

Figures 2A and 2B are schematics of slip bands in two cases of soft and hard alpha grain combinations. Figure 2A (Case-1) represents a soft grain that is not in the fully soft orientation. The total strain over a given length of hard-soft boundary (dX) resulting from cumulative cyclic damage is divided into small steps (dxi). The small steps result in low level of cumulative stress at the ends of the slip band steps. As the soft grain is oriented in a higher strength orientation and this results in increased stress required for slip, and the spacing between the slip bands will be set at a given close spacing. Figure 2B (Case-2) represents a soft grain that is in the fully soft orientation and results in the lowest stress to initiate and propagate slip in the soft grain. The total strain over a given length of hard-soft boundary (dX) resulting from cumulative cyclic damage is divided into large steps (dx₂). As the stress required for slip is low, the spacing between slip bands will approach a maximum spacing. The large slip band step results in a large accumulative stress at the ends of the slip band steps. The slip band spacing is related to the level of stress and subsequent intrusion step size that will form within the hard alpha grain at the intersection of the soft and hard grain. Larger slip band spacing, larger stress at the intersection and larger intrusion steps may result in more rapid formation of pre-cracks, cracking along a basal slip plane and reduction in dwell fatigue behavior. The presence of a basal plane twist boundary can also interact with slip band formation in either of the soft grains within a soft orientated bi-crystal and can result in strain accumulation that results in cracking of the basal twist boundary.

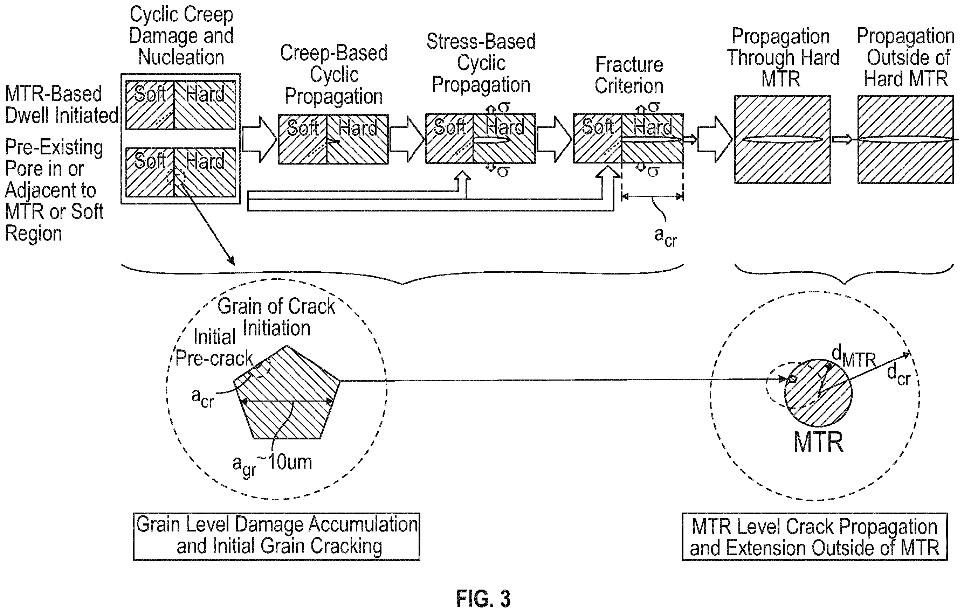

Figure 3 is a schematic of the sub-models that predict the specific mechanisms during the combined process of dwell fatigue damage accumulation, crack nucleation and crack propagation. The explicit probabilistic crack nucleation/propagation model provides: (i) pre-crack formation (driven by initial plastic deformation and by cyclic creep) through accumulation of dislocation pile-up and/or due to pre-existing pore; (ii) crack propagation through hard grain (micro-texture region) by a creep mechanism (driven by cyclic creep); (iii) crack propagation through hard grain by Paris mechanism (driven by stress cycling); crack propagation through the hard MTR and (iv) crack propagation outward of hard MTR by macroscopic Paris mechanism. Figure 3 also defines two major length scales relative to the defined mechanisms. One length scale is on the grain level where damage accumulates, a crack initiates and an initial grain fracture occurs next to an MTR. The second length scale is the cyclic propagation of the crack through the MTR and then outside of the MTR into typically non-textured material.
   It is noted that Figure 3 includes a potential for a pore, but this feature is not required for this failure mechanism to progress as defined herein and within the established probabilistic prediction framework. The pore reduces the strength of the soft region and increases the rate of pre-crack formation in the soft grain and subsequent crack formation in the hard alpha grain.

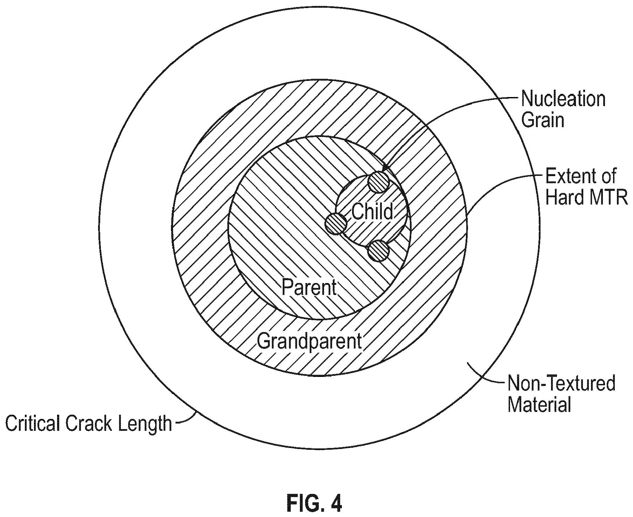

Figure 4 shows the arrangement of a hard oriented MTR that contains three distinct sub-regions referred to as a child, parent and grandparent region. The orientation of the entire assembly (often called a genealogy of sub-regions) is consistent with the requirements of being "hard oriented", but the child region is more closely aligned to fully hard, with the parent alignment being slightly less hard than the child, and the grandparent again slightly less hard than the parent. This arrangement of sub-regions is common within textured materials, such as titanium, but not all MTRs contain each of these elements. There are other features depicted in this figure, called initiator grains. These are individual grains and small grouping of individual grains that are oriented favorably for cyclic damage. These are shown at a more grain-level in Figures 1 and 3. There may be one or more of such specially oriented features next to an MTR assemblage or the child region of an MTR assemblage.
Figure 5 is a schematic of the overarching linked models for the holistic modeling and prediction of dwell fatigue across the length scales of sub-micron dislocation damage to macroscopic creep and crack growth in full-scale components.
Figure 6 is a schematic that describes how the series of models are connected and contribute to the initiation and growth of dwell fatigue cracks.
Figure 7 is a graph that shows an example of the experimental and model distribution of MTR sizes for a specific titanium material pedigree.
Figure 8 shows an example probability plot as a function of the number of cycles to failure for a specific material pedigree and application geometry, cyclic stress cycle and temperature.

### DETAILED DESCRIPTION OF THE DISCLOSURE

The exemplary embodiments disclosed herein are illustrative of advantageous probabilistic models and applications for component (e.g., titanium component) design optimization, and systems of the present disclosure and methods/techniques thereof. It should be understood, however, that the disclosed embodiments are merely exemplary of the present disclosure, which may be embodied in various forms. Therefore, details disclosed herein with reference to exemplary probabilistic models and applications for component design optimization and associated processes/techniques of use are not to be interpreted as limiting, but merely as the basis for teaching one skilled in the art how to make and use the advantageous probabilistic models and applications for component design optimization and/or alternative models/systems of the present disclosure.

As noted, certain materials (e.g., certain titanium materials) can be susceptible to micro-texture-based dwell fatigue debits. Materials that exhibit crystallographic anisotropy where various properties such as modulus, strength or creep as examples vary from one crystal orientation to another are susceptible to localized deformation and crystallographic damage. This localization of damage and accompanied stress localization can cause pre-mature crack initiation and propagation. Materials that exhibit this crystallographic anisotropy of properties include, but are not limited to hexagonally closed packed metallic materials, such as titanium, zirconium and magnesium, or other crystalline materials that provide for such anisotropic properties. When such materials are produced, micro-texture regions (MTRs) can be produced where an assemblage of neighboring grains are aligned in the same or similar orientations whereby making the assemblage (the MTR) act as a near-single unit. This larger scale microstructure feature causes redistribution of macroscopic applied stresses and associated strains. When such MTR features are oriented in a direction relative to the macroscopic applied stress that produces a behavior that is easier for deformation then this feature is termed as a "soft MTR" and conversely when such features are oriented in a direction relative to macroscopic applied stress that produces a behavior that is difficult for deformation then this feature is termed as a "hard MTR". When a hard MTR is positioned next to a soft MTR or soft grain and stressed from an externally applied load, the soft region will provide for slip and localized strain accumulation. FIG. 1 shows one such arrangement of microstructure features.

Micro-texture regions (MTRs) are defined to be an assemblage of neighboring grains that have similar crystallographic orientations, thereby making the assemblage (the MTR) act as a near-single unit. Hard oriented MTRs can be described in greater detail as sub-regions of collections of hard alpha grains with distinctly different ranges of alpha grain orientations. MTR characterization and statistical quantification are critical elements of the Probabilistic Dwell Fatigue ("PDF") model of the present disclosure.

MTRs are traditionally characterized using electron backscatter diffraction (EBSD), a scanning electron microscopy (SEM) based technique that gives crystallographic information about the microstructure of a sample. This data can be collected in 2D or 3D via serial section polishing. Data should be collected at approximately five micron step size (depending on material pedigree and size of the feature of interest) to pragmatically mitigate losing resolution of small and large features. Very fine step sizes (less than 3 um) may also increase difficulty to segment features due to presence of other phases (such as beta or acicular alpha). Alternative non-contiguous neighbor segmentation algorithms may provide better results in these cases. There are many alternative methods available and emerging to characterize microtexture. These methods include but are not limited to polarized light microcopy (PLM), heat tinting, acoustic or thermal methods.

Raw, pixel-based orientation data are cleaned and segmented into discrete features based on a user-defined c-axis misalignment tolerance. The cleaning process involves determination of "bad data" e.g., pixels with low confidence or high error. Standard image processing techniques (convolution, erosion, dilation, etc.) can be used to clean the data and remove noise. The C-axis misalignment is calculated between pixels and used to classify pixel groups. If the C-axis misalignment between pixels is < 10 degrees then pixels are grouped together and classified as a child; 20 degree misaligned pixels are classified as a parent; and 35 degree misaligned pixels are classified as grandparents. Once pixels are segmented into discrete features, additional image feature processing techniques are used to compute feature sizes, average orientations, neighbor lists, etc. Features above a critical size are classified as MTRs, while smaller features are considered grains or smaller grain assemblages. Features are also classified according to their c-axis misalignment angle to a user-defined reference direction or stress axis. Features with c-axis misalignment less than approximately 25 degrees are typically assigned a "hard" label. Features with c-axis misalignments near 45 degrees or greater than 70 degrees relative to the reference direction are considered "soft". Very hard MTRs with c-axis misalignments (between MTRs/grains) of 10 degrees or less are the typical features that drive nucleation. Hard MTRs with c-axis misalignments up to approximately 25 degrees can drive nucleation at higher stresses. MTRs with c-axis misalignment up beyond approximately 20 degrees but approximately less than 35 degrees support rapid faceted crack growth behavior.

The formation and evolution of MTRs results in assemblages of regions with these types of neighboring regions. Figure 4 shows the general spatial arrangement of MTR genealogy comprised of child, parent, and grandparent regions. The regions that are the most "hard" (typically with c-axis misalignments of 10 degrees or less) are termed "child" MTRs, which are the closest to the original assemblage of alpha grains during the evolution process of MTRs. Regions that are often adjacent to these child MTRs are regions that typically have c-axis misalignments of 20 degrees or less. These regions are termed "parent" MTRs, which are a more diffuse region of an originally formed MTR. There are other regions that are often adjacent to child and/or parent MTR regions that typically have c-axis misalignments of 35 degrees of misalignment or less. These regions are termed "grandparent" MTRs, which are a further diffuse region of an original MTR region. Statistical representation of the size and frequency of these features in a given pedigree of material can be required to support the probabilistic approach of predicting nucleation and separately propagation of fatigue cracks.

The inputs to the PDF model include various MTR metrics, size-dependent soft grain neighbor frequency and MTR clustering definitions/metrics. Specific to child, parent and grandparent MTRs, the area fraction, number density (count / unit area) and size distribution (parameterized to an inverse weibull distribution or any other suitable statistical distribution) are computed. The number of critical defects (hard MTR plus soft grain neighbors) are calculated using a linear relationship between the equivalent circle diameter of the hard MTRs and the number of soft grain neighbors along their perimeter. Soft grain neighbors are required to have at least one pixel within a specified distance from the external surface of the hard MTR to be included (three microns by default).

MTR clustering metrics can be calculated in a variety of different ways. One method involves multiple segmentations of the underlying orientation data, e.g., using 10, 20, and 35 degree c-axis misalignment tolerances. MTRs sizes are very sensitive to the grouping tolerance on c-axis misalignment and therefore much larger using a 35 degree tolerance vs. a 10 degree tolerance. The large features measured using a high c-axis misalignment tolerance can be shown to contain smaller, sub regions (found using a smaller c-axis misalignment tolerance). The number density and area fraction of these sub-region MTRs within a larger MTR can be used as a measure of the degree of clustering. Other options include computing two-point spatial correlations of hard oriented features, as well as computing distances from K nearest neighbors (where K=1 gives the distance to the nearest hard MTR, K=2 gives distance to two nearest MTRs, etc.).

Clustering of MTRs can impact crack growth from the origin MTR or during cyclic crack propagation outside of the origin MTR if a cyclically growing cracks encounters a new separate MTR. Statistics of clustering are important relative to size of origin fracture feature and the subsequent propagation of the crack during loading of a component.

To statistically define a material, pedigree, component or sub-region of a component, one must define how much orientation data must be collected (often in terms of total area) in order to have a specific confidence level. Variation in microtexture can be attributed to differences in material chemistry, billet stock and forging process. Sub-regions within a single component can have significant differences in micro-texture due to path-dependent thermo-mechanical history. It is recommended that multiple material heat codes (e.g., minimum 3) are used to generate inputs to the PDF model to account for these sources of variation. Large, extreme value MTR sizes have significant capability to change the MTR inputs to the PDF tool, so adequate area / material must be characterized to ensure these features are included. Bootstrap sampling statistical analyses have been used to justify a minimum of 15 EBSD scans (15×15mm each) for a single material pedigree in order to find these large features with over 90% confidence.

MTRs provide for unique mechanical behavior in the vicinity of these features. This gives rise to the observed dwell fatigue debit that must be predicted and controlled to enable maximum utilization of such materials. When stress is applied to an arrangement of microstructures as shown in FIG. 1 slip will occur within the soft orientated grains and these slip bands will intersect with the neighboring hard oriented grains (MTR). FIGS. 2A and 2B show schematically how this process of incremental displacement of the soft oriented grains by dislocation slip can occur. If the soft oriented grains (separated single grains or connected soft grains with a basal twist boundary) are oriented in the orientation that provides for the easiest slip, then slip will occur in a series of slip bands with a very large spacing (FIG. 2B), whereas soft grains that are oriented in a slightly less soft orientation will also produce slip, but the series of slip bands will be more closely spaced (FIG. 2A). The distance between slip bands depends on the strain of the soft grain. That strain can be accumulated at the part manufacturing and/or during operation. The difference in slip band spacing is critical on the magnitude and rate of stress accumulation at the soft-hard grain boundary. The larger the slip band spacing, the larger the localized intrusion and stress in the hard grain that is generated to withstand the accumulating large, localized strain in the soft grain slip band step. Smaller slip band steps within the soft grain at the soft-hard grain boundary will produce lower localized intrusion and stresses in the hard oriented grain. Connected soft grains with a basal twist grain boundary can also result in slip bands that result in cracking of the basal twist grain boundary.

The dislocation generation, slip and associated strain within the soft grain can be through yielding of the material or by time dependent creep. In the case of titanium, creep of soft orientated grains can be considerably faster than that of hard oriented grains. The anisotropic strength and creep behavior of alpha grain crystals are the primary drivers for localized strain damage in soft grains and increased stress within neighboring hard grains as the stress in the soft grains is transferred to the hard grains. Cyclic loading and the time in which load is applied to an arrangement of microstructural features within a volume of material, such as within a component, can allow for cyclic creep to occur in the soft oriented grains and cyclic shedding of stress to the hard orientated grain. Repeated loading cycles can then lead to critical stress within the hard oriented grain such that a crack nucleates.

The overall process of dwell fatigue can be described as schematically shown in FIG. 3. This figure shows the various mechanisms within dwell fatigue that can result in localized damage and eventually component fracture. As seen in the initial box on the left, MTRs with a microstructural arrangement as noted above can cause localized crack nuclei. If a pore exists at the interface of the soft and hard oriented grains, the cyclic requirement to generate sufficient damage in the hard orientated alpha grain can be bypassed. The crack that nucleates is often observed in a single hard oriented grain. The crack nuclei can continue to cyclically grow by one or more mechanisms into the hard oriented grain until the crack reaches the fracture toughness of the hard orientated grain and then the entire hard grain rapidly cracks. The crack can continue to grow within the MTR as the grains within the MTR have a similar crystallographic orientation as the initial cracked grain. The crack will progress within the MTR at an accelerated rate with one or more mechanisms until the entire MTR is cracked. The crack will continue to progress outward from the cracked MTR with normal cyclic crack growth behavior if the surrounding material contains substantially random oriented grains. If the crack that grows from the cracked MTR encounters another MTR, the crack growth behavior and rate can be modified, often in a manner that will increase the overall average crack growth rate.

If a pore (void) is present in the vicinity the hard and soft grain feature, the pore can act as a stress concentration that increases the effect of the macroscopic stress. This can result, depending on the size of the pore, the macroscopic stress, and the location of the pore, in increased rate of creep damage in the soft grain. The same series of mechanisms described above can then occur in series which can lead to the potential of fracture of a component.

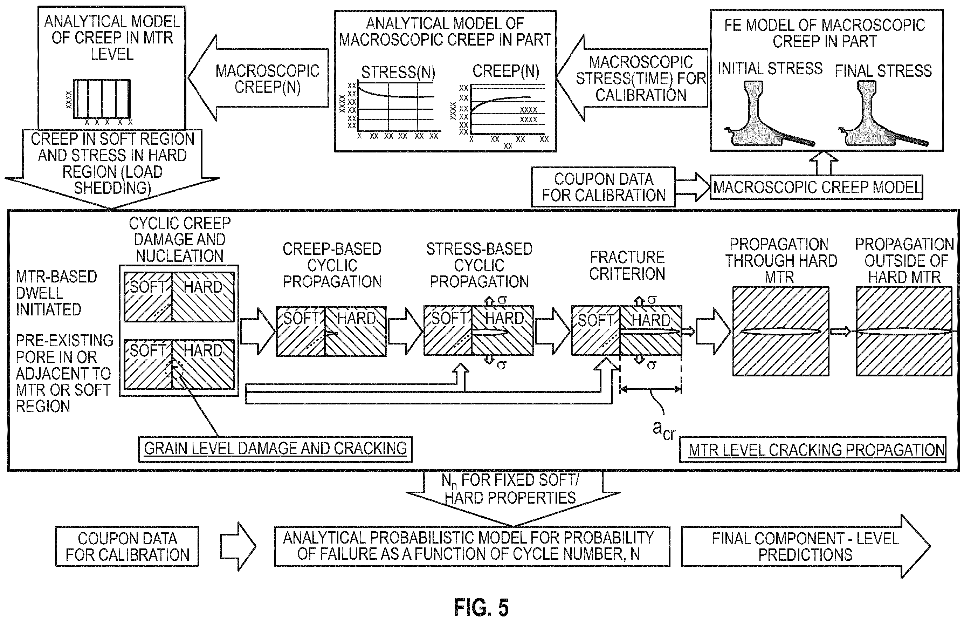

Table 1 below lists the sub-models that define the competing micro-mechanisms for dwell fatigue crack initiation and propagation. Table 2 below lists the various material parameters that can be required as inputs to the sub-models and the typical source of the parameter values. FIG. 5 shows a computational workflow for the assembly of the required mechanisms that can be simulated to enable prediction of failure of a component by dwell fatigue. The process starts in the upper right corner step where macroscopic stresses and macroscopic creep is modeled to analyze macroscopic creep and redistribution of stresses throughout the volume of component during the initial stages of cyclic loading until the stress in all stressed regions are determined to be effectively constant upon further cyclic loading. The stresses in each volume of the component are then used to predict the localized strain and damage from cycle-1 to cycle-N, where cycle-N is an arbitrary number of loading cycles. The entire volume of a stressed part is discretized into a series of incremental volumes of known stress (e.g., stressed volumes). Models for each physics-based mechanism are then applied to each stressed volume. For competing mechanisms, simulation is conducted in parallel and the mechanism that drives the behavior is applied for that instance for that specific volume.

**Table 1: List of sub-models utilized within a PDF Model System to predict the life of components produced with material that can contain microtexture that enables the cyclic, dwell fatigue mechanism:**

| **Critical Models and Criterion within the Probabalistic Dwell fatigue (PDF) Modeling System** | | |
|---|---|---|
| **Model / Criterion^{∗}** | **Function** | **Output or Supports a Specific Calculation Output** |
| Macroscopic Creep Model | Prediction of macroscopic creep with component | Stress distribution within arbitrary part geometry and each stressed volume as a function of arbitrary loading cycles |
| Microscopic Creep Model | Prediction of microscopic creep at hard/soft region pairs | Stress distribution within hard and soft regions as a function of arbitrary loading cycles |
| Nucleation Criterion | Condition when hard oriented region grains will form a pre-crack | Cycle number when a pre-crack will form |
| Microscopic Dwell-dependantCyclic Crack Growth Model | Crack growth behavior and rate in hard oriented grains and MTR features | Crack growth rate in a hard oriented grain of MTR due to dwell time-dependant cyclic loading; crack length (a) as a function of cycles (n) |
| Microscpic Dwell-independant Cyclic Crack Growth Model | Crack growth behavior and rate in hard oriented grains and MTR features | Crack growth rate in a hard oriented grain of MTR due to cyclic loading independent of dwell; crack length (a) as a function of cycles (n) |
| Fracture Criterion | Condition when a crack becomes unstable and will freely run in a hard oriented grains, MTR features of non-textured material | Number of cycles (n) when a hard oriented grain, an MTR or a complete component will completely fail |
| Macroscopic Dwell-independentCyclic Crack Growth Model | Crack growth behavior and rate in non-textured material outside of an MTR region | Crack growth rate in non-textured material outside of an MTR due to cyclic loading independent of dwell; crack length (a) as a function of cycles (n) |
| | | |
| ^{∗} Models include ability to take affects of orientation and texture characteristics of hard oriented alpha grains, MTRs and non-textured material to perform prediction calculations. | | |

**Table 2: List of some critical parameters required as inputs to the sub-models; Material parameters should be measured or calibrated on the specific material and pedigree for which the model will be applied for predictions:**

| **Critical Model Parameters** | | |
|---|---|---|
| **Parameter** | **Meaning** | **Method of Determination** |
| gamma_h0(pa^{∗}m) | Fracture toughness of hard oriented grains | Calibration |
| sigma_p), (Pa) | Parameter of microscopic crack growth | Calibration |
| dV, (m^3/mol) | Activation volume for dislocation slip | Calibration |
| E', (Pa) | Hardening modulus | Calibration |
| E, (Pa) | Elastic Modulus | Measurement |
| Sigma_ys, (Pa) | Yield strength | Measurement |
| E0, (J/mol) | Activiation energy for dislocation slip | Calibration |
| tau_0, (s) | Time scale parameter | Calibration |
| l_0, (m) | Average distance between slop bands | Calibration |
| sigma_soft, (Pa) | Minimum stress for soft grain creep | Measurement |
| C | Strength factor | Calibration |

Some model parameters can be established through fitting the model predictions for specimens of the material with the specific microstructure statistics governed by material pedigree. Typically, the specimen volume is smaller than the part volume and the specimen load is larger than part load. Therefore, the specimen data cannot be used for direct prediction of components. The PDF model enables using the specimen data for probabilistic prediction of the part through calibration (establishment of the model parameters from specimen data).

A critical element of the model is the description of the microstructure statistics that are utilized within the models. MTR size and frequency information is one microstructure characteristic that is incorporated into the model, along with a parameter on the statistics of MTR clustering. Both of these statistically defined microstructure features are sampled within the overall modeling framework, which enable probability of failure of the material within each stressed volume as a function of the number of loading cycles, N. The model framework enables accumulation of probability of failure as a function of the number of loading cycles, N, over the entire component volume.

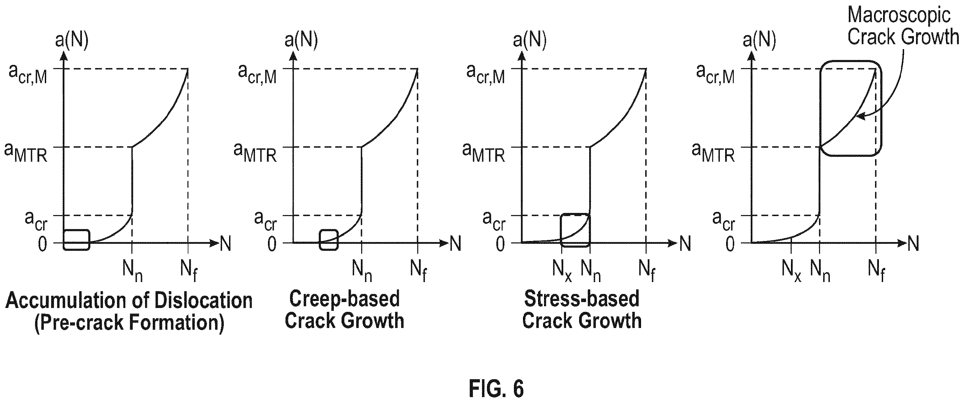

FIG. 6 shows example outputs for the model for a specific component with a specific stressed volume distribution, cyclic loading condition (stress versus time history) and temperature. The probability of failure (PoF) curve is a combination of all stressed volumes and the mechanisms that are used to predict failure. The major mechanisms included in the model include Initial Crack Nucleation; a Mechanism for crack growth, Paris crack growth, Fracture Toughness Criterion, and External Normalized Paris crack growth. These mechanisms can be in effect within a single hard oriented grain and/or the entire MTR and the material outside of the MTR.

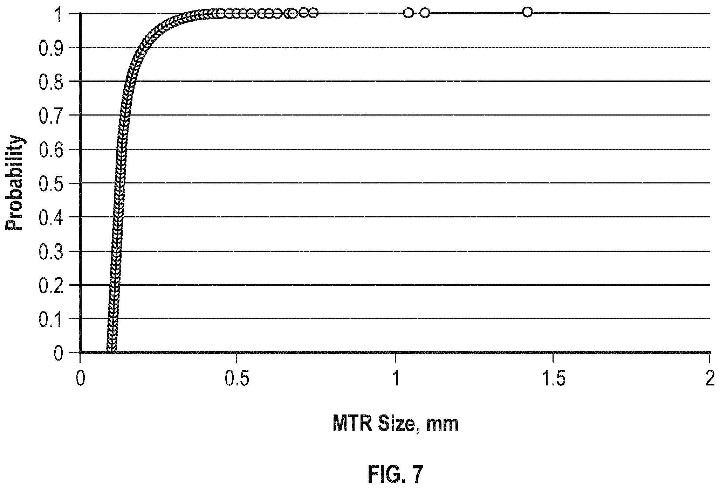

The model can provide prediction of probability of failure as a function of MTR metrics or features or characteristics. FIG. 7 represents the probability of occurrence of an MTR of a specific size.

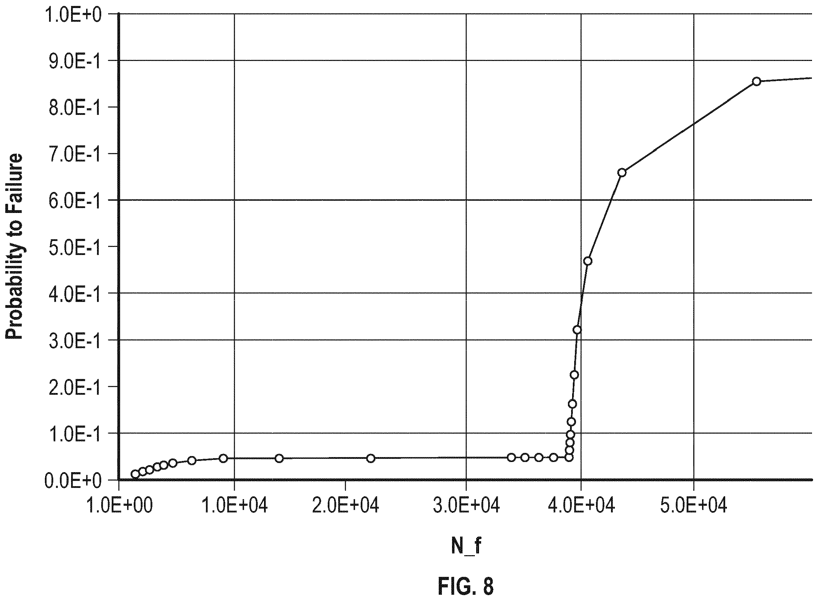

FIG. 8 shows an example of an overall component PoF that combines the PoF from multiple stressed volumes. This result shows that this new computational tool can provide for the probabilistic prediction of failure of a component with a known material pedigree, stressed volume distribution, cyclic loading conditions and temperature.

Current practice provides that there is generally no known industrially practical approach to predict this behavior, and has forced the industry to either eliminate microtexture in materials (e.g., titanium materials), reduce stress levels below where the mechanism occurs, or live with product risk (typically not acceptable). As such, there is a need to predict the life of components (e.g., titanium components) based on material microstructure statistics and product mission specifics and variation.

In exemplary embodiments, the present disclosure provides advantageous probabilistic models, systems and applications for components (e.g., titanium component) design optimization and related methods of use, and where the probabilistic models, systems and applications can predict the life of components based on material microstructure statistics and/or product mission specifics and/or variations, thereby providing significant operational, manufacturing, commercial and/or revenue advantages as a result, and as discussed further below.

Current conventional practice provides that there is no way to probabilistically predict the dwell fatigue life of certain materials (e.g., titanium) where specific ranges of micro-texture are present and when the material is utilized under conditions where dwell-fatigue based mechanisms occur.

In exemplary embodiments, the present disclosure advantageously provides an analytical modeling framework that captures the various physics-based mechanisms for dwell fatigue damage accumulation, crack nucleation, crack propagation and fracture in components or materials (e.g., anisotropic components/materials). The modeling framework thereby enables the prediction of dwell fatigue behavior as a function of microstructure (e.g., material microstructure statistics) and/or loading conditions (e.g., product mission specifics). The model and modeling framework enables the probabilistic prediction of dwell fatigue in material (e.g., titanium) which contains regions of micro-texture, thus enabling such material to be utilized for specific application conditions with prediction of material and component fatigue life capabilities. The present disclosure provides a new approach to link multiple physics-based mechanisms to enable accurate prediction of dwell-fatigue failure probability.

The advantageous systems and methods of the present disclosure thereby enables the safe utilization of material (e.g., titanium material) with controlled levels of micro-texture, and enables product differentiation by allowing components to be utilized in application spaces where dwell fatigue failure mechanisms can occur. This in turn enables lighter weight components, the ability to design for higher application stress, dwell times and/or other critical parameters.

For example, by utilizing the systems and methods of the present disclosure, this will thereby enable rotor designs (e.g., titanium rotor designs) to be allowed to run at higher stress and hence lighter weight. It is noted that conventional designs can be limited to very low stress levels to mitigate the dwell fatigue failure mechanism in components (e.g., titanium components).

The systems and methods of the present disclosure can provide the ability to analyze full-scale components (e.g., titanium components) and predict dwell fatigue debits and life. This advantageously allows the use of material with micro-texture and allows one to utilize components at stress levels where this mechanism can occur.

Some exemplary physics-based models and framework requirements of the systems and methods of the present disclosure include: calculating nucleation and propagation; probability of nucleation; ways to combine mechanisms (e.g., damage, pre-crack, alpha grain, MTR or micro-texture region, external Paris); assessing multiple failure mechanism paths and which identifies the leading mechanism (nucleation vs pore); ways to combine specimen low volume data and full part large volume data; the ability to perform in a closed form or Monte Carlo approach; the relationship between and incorporating material pedigrees; incorporating material structure statistics; flow diagram of calculations; and/or roll-up of risk over entirety of part stressed volumes and mission.

Some exemplary materials characterization requirements of the systems and methods of the present disclosure include: MTR (micro-texture region) and microtexture clustering statistics, which are used to define a material pedigree. Each pedigree will have a unique statistical description of MTR size and frequency distribution and MTR clustering. A pedigree can define an entire part or only a region within a part. The methods to define a pedigree are a critical element of the present disclosure. Other materials characterization requirements include soft grain statistical information (l₀) - mean slip band spacing and distribution; manufacturing processing path relationship to microstructure combined with experimentally observed observations and microstructure features; maximum size MTRs (micro-texture region) in any distribution; and/or pore frequency and location within microstructure.

In exemplary embodiments, the present disclosure provides for: (i) the combination of models for incorporation of multiple physics-based mechanisms for generation of damage in material (e.g., titanium); (ii) the incorporation of a statistical description of material microstructure with a physics-based damage mechanism model; and/or (iii) the application of a model to predict component application life.

The systems and methods of the present disclosure comprise a series of sub-models, each which describe and enable prediction of sub-mechanisms involved in the development of strain, damage, crack formation and crack propagation within material (e.g., titanium material) with a heterogeneous assemblage of polycrystalline phases.

For example, a Probabilistic Dwell Fatigue ("PDF") model of the present disclosure predicts probability to failure of Ti alloy parts as a function of material pedigree (microstructure assemblage), operational conditions and/or stress distribution in the part. The fatigue failure of material includes two stages: a crack nucleation stage and a crack propagation stage. At the nucleation stage, the crack nuclei of sub-micron size are formed in the material. At the propagation stage these sub-micron crack nuclei gradually grow under applied cyclic stress. The part failure occurs when the largest crack reaches critical size after which crack growth becomes very fast. In exemplary embodiments, the Probabilistic Dwell Fatigue ("PDF") model includes two major submodel elements that describe both stages of material fatigue failure: a crack nucleation model and a crack propagation model.

In certain embodiments, the crack nucleation model incorporates the concept of critical defect in Ti alloy polycrystalline material. According to this concept, critical defect in Ti alloys is the pair of soft and hard grains (or regions). It is also implemented that the soft grain can be a soft grain feature that is comprised of multiple favorably oriented soft grains or a combination with other soft features, such as, for example, pores (vacuum or gas filled), or properly aligned assemblage of beta transformed structure. Titanium alloys below the beta-transition temperature (beta transus) possess both hexagonal close packed ("HCP") lattice phase (alpha phase) and body centered cubic ("BCC") lattice phase (beta phase). These phases form and are present in a polycrystalline form. The crystals with HCP lattice demonstrate strong anisotropy of mechanical properties, especially crystal plasticity. Yield stress and modulus of the alpha grain is high if the basal plane of the grain lattice is orientated normal (e.g., 90-degrees) from the direction of applied stress. That is caused by high critical resolved shear stress ("CRSS") of a pyramidal slip system that participates in crystal plasticity under such direction of applied stress, and such an alpha grain is considered a hard oriented alpha grain or simply hard grain. The alpha grain with orientation of basal plane of the grain lattice parallel to applied stress direction is considered to be a soft oriented alpha grain or simply a soft grain. Yield stress of the grain is low if the c-axis (e.g., the normal direction to the basal plane) of the alpha grain lattice is orientated perpendicular to applied stress direction. That is caused by low CRSS of basal and/or prismatic slip systems that participates in crystal plasticity under such direction of applied stress. The alpha grain with orientation of c-axis of grain lattice perpendicular to applied stress direction is soft grain.

The soft and hard orientations of the HCP alpha crystal exhibit greatly different modulus, strength and creep properties. The soft grain is subjected to plastic deformation and creep under applied external stress due to its lower creep strength and increased creep rate as compared to hard oriented alpha grains. This plastic deformation/creep is caused by the generation and motion of dislocations in soft grain. However, the dislocations from soft grain cannot penetrate into the neighbor hard grain through the soft/hard grain interface because the pyramidal slip system in the hard grain will not be activated until the stress is much higher than that of initial slip in the soft grain. The number of dislocations in the pile-up within the soft grain slip bands increases with increase of soft grain plastic deformation/creep. The stress at the end of dislocation pile-up increases with increase of the number of dislocations in the pile-up. This stress causes pre-crack formation in the neighbor hard grain when the stress at hard/soft interface exceeds some critical value required to brake chemical bonds in a titanium grain. Therefore, the probability of pre-crack formation increases with increase of plastic deformation/creep of soft grain, which is caused by external stress cycling. The value of plastic deformation/creep of soft grain depends on the time (or dwell) at which the part is subjected by external stress. That is the origin of dependence of number of cycles to failure on dwell time for titanium alloys.

After pre-crack formation, the crack can grow into the hard grain through two mechanisms: the strain driven crack nucleation mechanism, and the stress driven Paris mechanism. In the strain driven crack nucleation mechanism, pre-crack propagation in the hard grain is caused by incursion of a dislocation step of soft grain into the hard grain. That results in increase of pre-crack opening and gradual pre-crack propagation. This mechanism requires very large plastic deformation of the soft grain that takes place only at very large macroscopic plastic deformation of the part that is not typical for normal part service, or through concomitant cracking in the adjacent grain that is accumulating the cyclic strain damage. In the Paris mechanism, pre-crack propagation in hard grain is caused by external stress cycling. This mechanism does not require plastic deformation/creep of soft grain. Therefore, it is responsible for pre-crack propagation in most practical and important cases or production components, such as turbine engine disks. The Paris equation with values of parameters adopted from experimental data for small cracks in Ti64 alloy are used for modeling of pre-crack propagation in hard grain through the Paris mechanism. The pre-crack penetrates quickly through the whole grain after reaching critical size that is calculated through the conventional Griffith's equation. If the hard grain with a pre-crack belongs to a micro-texture region (MTR) with orientation of c-axis of grains lattice predominantly along the stress direction (e.g., a hard oriented MTR), the crack penetrates fast through the whole MTR. Therefore, the macroscopic crack nucleus of the size of hard MTR is formed. This process of MTR cracking can be fast, leading to the effective impact of debiting the fatigue capability of the material or component.

The total number of cycles, Nₙ, required for crack nucleation is equal to the number of cycles required for pre-crack formation plus the number of cycles required for pre-crack propagation though hard grain. The number of cycles required for pre-crack propagation through hard grain to critical size is calculated from the Paris equation. The number of cycles required for pre-crack formation depends on plastic deformation of the soft grain and on maximal distance between slip bands (slip bands spacing) in the soft grain, which is a measure of the extent of softness of the soft grain or region. Plastic deformation of the soft grain is calculated as a function of operational conditions (temperature, applied stress amplitude, cycle duration). Slip band spacing is a random variable over the range bounded by the alloy properties and crystal orientation. The probability distribution of slip band spacing is assumed to be power function with two parameters (Of note, the slip band spacing can be modeled as an exponential distribution, with a single controlling parameter). Therefore, the probability, Pₙ(Nₙ), of pre-crack formation after Nₙ cycles is equal to probability to find slip band spacing, l, in critical defect that provides such Nₙ(l).

The crack propagation model calculates the number of cycles, Nₚᵣ, required for crack propagation through the child, parent and grandparent MTR up to a critical size, after which the crack propagates fast through the whole part. Critical crack size is calculated through the conventional Griffith's equation. The crack propagation is modeled by the conventional Paris law with values of parameters adopted from experimental data for Ti64 alloy. Crack growth acceleration factors are applied based on the density of the MTR -which are different for child, parent and grandparent MTRs. The crack growth acceleration factor also depends on the mission dwell time. The integration of the Paris equation results in the equation for the crack size as a function of cycle number and cycling stress amplitude. The number of cycles for crack propagation, Nₚᵣ, is calculated from this equation. The Nₚᵣ depends on the child, parent and grandparent MTR sizes and on the critical crack size. The child MTR size, r_{MTR}, at which the crack was nucleated is a random variable. The sizes of the parent and grandparent MTRs are probabilistically calculated based on measured size ratios with the assumption that parent MTR size is greater than child MTR size and the grandparent MTR size is greater than the parent MTR size. The probability of crack nucleation on the child MTR of size r_{MTR} is proportional to the surface area of this MTR. The probability of crack nucleation at the MTR of size r_{MTR} is calculated from the probability distribution of the MTR size. The probability distribution of the MTR is fitted from experimental MTR sampling obtained from EBSD images. Therefore, the probability, Pₚᵣ(Nₚᵣ), of crack propagation to critical size after Nₚᵣ cycles is equal to the probability of crack nucleation through the sampled child, parent and grandparent MTR assemblage, that provides such Nₚᵣ(r_{MTR}).

The total number of cycles required for part failure, Nf, is equal to the sum of the number of cycles required for crack nucleation, Nₙ, and the number of cycles required for crack propagation, Nₚᵣ. The PDF model contains analytical equations for both cumulative probabilities: probability of nucleation, Pₙ(Nₙ), and probability of propagation, Pₚᵣ(Nₚᵣ). The total cumulative distribution of the number of cycles to failure, P_{f}(N_{f}) is calculated as the convolution of these two cumulative distributions, Pₙ(Nₙ) and Pₚᵣ(Nₚᵣ). The PDF model can also be run probabilistically using Monte Carlo sampling of MTR sizes and other associated statistics.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof' is open and includes any combination comprising at least one of the listed components or properties optionally together with a like or equivalent component or property not listed.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Although the systems and methods of the present disclosure have been described with reference to exemplary embodiments thereof, the present disclosure is not limited to such exemplary embodiments and/or implementations. Rather, the systems and methods of the present disclosure are susceptible to many implementations and applications, as will be readily apparent to persons skilled in the art from the disclosure hereof.

The present disclosure expressly encompasses such modifications, enhancements and/or variations of the disclosed embodiments. Since many changes could be made in the above construction and many widely different embodiments of this disclosure could be made without departing from the scope thereof, it is intended that all matter contained in the drawings and specification shall be interpreted as illustrative and not in a limiting sense. Additional modifications, changes, and substitutions are intended in the foregoing disclosure. Accordingly, it is appropriate that the appended claims be construed broadly and in a manner consistent with the scope of the disclosure.

## Claims

1. A probabilistic method for predicting dwell fatigue behavior comprising:
providing a probabilistic modeling framework that captures physics-based mechanisms for dwell fatigue damage accumulation, crack nucleation, crack propagation and fracture in a component; and
utilizing the probabilistic modeling framework to predict dwell fatigue behavior of the component as a function of micro-structure and loading conditions of the component;
wherein the component comprises an anisotropic material.

2. The probabilistic method of Claim 1, wherein the anisotropic material comprises at least one of titanium, zirconium, magnesium or other hexagonal close-packed (HCP) metals or alloys.

3. The probabilistic method of Claim 1 or 2, wherein the component is:
a turbine engine rotor component; and/or
an arbitrary material sample, a test specimen or a full-scale component.

4. The probabilistic method of any preceding Claim, wherein the probabilistic modeling framework comprises sub-models, the sub-models describing critical sub-mechanisms that lead to dwell fatigue debits of the component.

5. The probabilistic method of Claim 4, wherein material parameter inputs to the sub-models include fracture toughness of hard oriented grains, parameters of microscopic crack growth, activation volume for dislocation slip, hardening modulus, elastic modulus, yield strength, activation energy for dislocation slip, time scale parameters, average distance between slip bands, minimum stress for creep and a strength factor for a soft grain or a soft bi-crystal grain with a basal twist boundary, optionally wherein the material parameter inputs are established by separate material characterization or by test specimen and component calibration.

6. The probabilistic method of Claim 4 or 5, wherein:
the sub-models include a macroscopic creep model; a microscopic creep model; a microscopic dwell-dependent cyclic crack growth model, a microscopic dwell-independent cyclic crack growth model, and a macroscopic dwell-independent cyclic crack growth model, and wherein the sub-models include a nucleation criterion and a fracture criterion; and/or
wherein small volume, uniquely stressed test specimen data is applied to the calibration of the sub-models, which is then applied to larger volume, arbitrarily stressed components.

7. The probabilistic method of any preceding Claim, wherein:
the probabilistic modeling framework is constructed in a probabilistic format through the use of Monte Carlo or closed-form methods; and/or
inputs to the probabilistic modeling framework are provided in a statistically-based manner.

8. The probabilistic method of any preceding Claim, wherein the probabilistic modeling framework defines microstructure features in the component.

9. The probabilistic method of any preceding Claim, wherein the probabilistic modeling framework utilizes micro-texture region (MTR) characterization and statistical quantification to predict dwell fatigue behavior of the component.

10. The probabilistic method of any preceding Claim, wherein inputs to the probabilistic modeling framework include various orientation-based micro-texture region (MTR) metrics including size, quantity, density and spacing; size-dependent soft grain neighbor frequency; and MTR clustering metrics, including information for discrete MTR misorientation categories; and
wherein the inputs for the MTR metrics include determining the area fraction, number density (count / unit area) and size distribution of the MTRs.

11. The probabilistic method of any preceding Claim, wherein utilizing the probabilistic modeling framework to predict dwell fatigue behavior of the component comprises modeling macroscopic stresses and macroscopic creep to analyze macroscopic creep and redistribution of stresses throughout the volume of the component during the initial stages of cyclic loading until the stress in all stressed regions are determined to be effectively constant upon further cyclic loading; and
utilizing the stresses in each volume of the component to predict the localized strain and damage from cycle-1 to cycle-N, where cycle-N is an arbitrary number of loading cycles.

12. The probabilistic method of any preceding Claim, wherein utilizing the probabilistic modeling framework to predict dwell fatigue behavior of the component includes incorporating MTR size and frequency information into the modeling framework, along with a parameter on statistics of MTR clustering.

13. The probabilistic method of any preceding Claim, wherein mechanisms included in the modeling framework include initial crack nucleation, a mechanism for crack growth, Paris crack growth, a fracture toughness criterion, and external normalized Paris crack growth.

14. The probabilistic method of any preceding Claim, wherein:
the probabilistic modeling framework includes a crack nucleation model and a crack propagation model to describe both stages of material fatigue failure; and/or
nucleation and propagation of a fatigue crack is calculated separately.

15. The probabilistic system of any preceding Claim, wherein statistics of a given material pedigree is used to predict crack growth rate within and outside of an original micro-texture region (MTR) feature.
